# EUROPEAN PATENT APPLICATION

(11) **EP 2 439 255 A1**
(43) Date of publication of application: **11.04.2012**
(21) Application number: 10186528.5
(22) Date of filing: 05.10.2010
(51) Int. Cl.: C10L 3/06, C10L 3/10, B01D 53/52, B01D 53/62

(54) **Method and system for producing a contaminant-depleted gas stream**

(71) Applicant: Shell Internationale Research Maatschappij B.V., 2596 HR The Hague (NL)
(72) Inventor: van Dorst, Eva Marfilia, 1031 HW Amsterdam (NL); Geers, Henricus Abraham, 2288 GS Rijswijk (NL); Puik, Eric Johannes, 2288 GS Rijswijk (NL)
(74) Representative: Matthezing, Robert Maarten

(57) **Abstract**

The present invention provides a method for producing a contaminant-depleted gas stream (130) from a contaminant-containing hydrocarbon feed gas stream (10), the method at least comprising the steps of:
(a) providing a contaminant-containing hydrocarbon feed gas stream (10);
(b) removing a first part of the contaminant from the contaminant-containing hydrocarbon feed gas stream (10) at a first location (2), thereby obtaining a partially contaminant-depleted gas stream (20);
(c) transporting the partially contaminant-depleted gas stream (20) to a second location (3), wherein the distance between the first location (2) and second location (3) is preferably at least 1 km;
(d) removing a second part of the same contaminant from the partially contaminant-depleted gas stream (20) at the second location (3), thereby obtaining a contaminant-depleted gas stream (130); and
(e) optionally liquefying the contaminant depleted gas stream (130), thereby obtaining a liquefied gas stream (160).

## Description

The present invention relates to a method for producing a contaminant-depleted gas stream from a contaminant-containing hydrocarbon feed gas stream. In particular, the present invention relates to the removal of acidic contaminants from a hydrocarbon gas stream, such as a natural gas stream that contains hydrocarbons and acidic contaminants, which hydrocarbon gas stream is to be liquefied subsequently.

Natural gas streams may contain acidic and other contaminants. As acidic contaminants (the most prominent acidic contaminants being H₂S and CO₂) may prove to be corrosive and toxic, these contaminants are removed from the natural gas stream, in particular if the natural gas stream is to be liquefied subsequently. It is desirable to liquefy a natural gas stream for a number of reasons. As an example, natural gas can be stored and transported over long distances more readily as a liquid (LNG; liquefied natural gas) than in gaseous form, because it occupies a smaller volume and does not need to be stored at high pressures.

Several methods for producing a contaminant-depleted gas stream from a contaminant-containing hydrocarbon feed gas stream and subsequently liquefying the contaminant-depleted gas stream are known.

In case the well in which the contaminant-containing hydrocarbon feed gas stream is produced is remote from the LNG production plant, a problem occurs that large transportation lines are needed. This problem is even more pertinent in case the contaminant-containing hydrocarbon feed gas stream contains large amounts of contaminants, in particular CO₂ and H₂S.

It is an object of the invention to minimize the above problem.

It is a further object of the present invention to provide an alternative method for producing a contaminant-depleted gas stream.

One or more of the above or other objects are achieved according to the present invention by providing a method for producing a contaminant-depleted gas stream from a contaminant-containing hydrocarbon feed gas stream, the method at least comprising the steps of:
(a) providing a contaminant-containing hydrocarbon feed gas stream;
(b) removing a first part of the contaminant from the contaminant-containing hydrocarbon feed gas stream at a first location, thereby obtaining a partially contaminant-depleted gas stream;
(c) transporting the partially contaminant-depleted gas stream to a second location, wherein the distance between the first location and second location is preferably at least 1 km;
(d) removing a second part of the same contaminant from the partially contaminant-depleted gas stream at the second location, thereby obtaining a contaminant-depleted gas stream; and
(e) optionally liquefying the contaminant depleted gas stream, thereby obtaining a liquefied gas stream.

An advantage of the present invention is that, as part of the contaminant has already been removed at the first location, smaller transportation pipelines are required between the first and second location (when transporting the partially contaminant-depleted gas stream from the first to the second location). The present invention is particularly suitable for hydrocarbon feed gas stream containing large amounts of contaminants, such as >25 vol.%. Also, the present invention is particularly suitable for preparing a contaminant-depleted gas stream that is to be liquefied subsequently.

The contaminant-containing hydrocarbon feed gas stream may be any gas stream that contains significant amounts of hydrocarbons, especially methane. It includes a natural gas stream, an associated gas stream or a coal bed gas stream. The hydrocarbon fraction in such a gas stream is suitably from 10 to 85 vol.% of the gas stream, preferably from 25 to 80 vol.%. Especially, the hydrocarbon fraction of the gas stream comprises at least 75 vol.% methane, preferably at least 90 vol.%, based on the total hydrocarbon fraction.

Depending on the source, the gas stream may contain varying amounts of hydrocarbons heavier than methane such as ethane, propane, butanes and pentanes as well as some aromatic hydrocarbons. The natural gas may also contain non-hydrocarbons such as H₂O, N₂, CO₂, H₂S and other sulphur compounds, and the like.

According to the present invention the contaminant may be any contaminant. Preferably, the contaminant is gaseous at atmospheric temperature and pressure, preferably selected from H₂S and CO₂, in particular CO₂.

Typically, the contaminant-containing hydrocarbon feed gas stream in step (a) contains from 20 to 80 vol.% contaminant. According to a preferred embodiment of the present invention, the contaminant-containing hydrocarbon feed gas stream in step (a) contains at least 25 vol.% contaminant.

Typically, the partially contaminant-depleted gas stream in step (b) contains from 2 to 25 vol.% contaminant. Preferably, the partially contaminant-depleted gas stream in step (b) contains at least 2 vol.% contaminant, preferably at least 5 vol.%, more preferably at least 10 vol.%. Usually, the partially contaminant-depleted gas stream in step (b) contains less than 20 vol.% contaminant.

Typically, the contaminant-depleted gas stream in step (c) contains less than 1 vol.% contaminant. Preferably, the contaminant-depleted gas stream in step (c) contains less than 500 ppm, preferably less than 200 ppm, more preferably less than 50 ppm contaminant.

According to an especially preferred embodiment of the present invention, the first location is near a well, preferably near an offshore well. Typically, the first location is within a distance of 1000 m, preferably 500 m, more preferably 200 m from that part of the well where the well reaches the surface, or in the event of a subsea well, from that location where the wellhead flow reaches the water surface. It is particularly preferred that the first part of the contaminant (in particular if the contaminant is CO₂) obtained in step (b) is re-injected in the well. An advantage of having the first location close to the well, is that the amount and length of pipelines in order to re-inject the contaminant into the well from which the contaminant-containing hydrocarbon feed gas stream has been obtained can be reduced. It goes without saying that the contaminant can be (partly) injected in a separate well as well.

The first and the second location may be situated either onshore or offshore (for example, on one or more platforms, on a FPSO (floating, production, storage and offloading) vessel or on a floating structure such as a FLNG (floating LNG) plant)). Thus, combinations of onshore-onshore, offshore-offshore, onshore-offshore and off-shore-onshore for the first and second location are all comprised in the invention. It is nevertheless preferred that the second location is onshore. In particular when the removing of said second part of the contaminant from the partially contaminant-depleted gas stream involves absorption using solvents and regeneration thereof, it is much easier to operate onshore than offshore.

It is preferred that the distance between the first and second location is at least 2 km, preferably at least 5 km, more preferably at least 10 km, even more preferably at least 50 km.

In another aspect the present invention provides a system for producing a contaminant-depleted gas stream from a contaminant-containing hydrocarbon feed gas stream, the system at least comprising:
- a first treating unit at a first location for removing a first part of the contaminant from the contaminant-containing hydrocarbon feed gas stream, in order to obtain a partially contaminant-depleted gas stream;
- a second treating unit at a second location for removing a second part of the same contaminant from the partially contaminant-depleted gas stream, in order to obtain a contaminant-depleted gas stream; and
- optionally a liquefaction plant for liquefying the contaminant-depleted gas stream.

The person skilled in the art will readily understand that the first and second locations are not limited to include only a single treating unit but are rather intended to each include a plant site containing one or more treating units. These treating units may include (in addition to the treating unit for removing the contaminant which is in particular CO₂ and/or H₂S) conventional treating units such as a slug catcher, a condensate stabilizer, acid gas removal (AGR) units, dehydration units, sulphur recovery units (SRU), mercury removal units, nitrogen rejection units (NRU), helium recovery units (HRU), hydrocarbon dewpoint units, etc. Also fractionation or extraction units for recovery of e.g. C₃/C₄ liquid petroleum gas (LPG) and C₅₊ liquid (condensate) may be present on the first and/or second location. As these treating units as such are well known to the person skilled in the art, they are not further discussed here.

In case the contaminant-depleted gas stream is to be liquefied to obtain LNG, the second location is preferably situated near an LNG export terminal from where the liquefied contaminant-depleted gas stream is shipped or otherwise transported to the desired markets. In that case, on the second location at least a liquefaction plant is present to obtain a liquefied hydrocarbon product.

Hereinafter the invention will be further illustrated by the following non-limiting drawing. Herein shows:

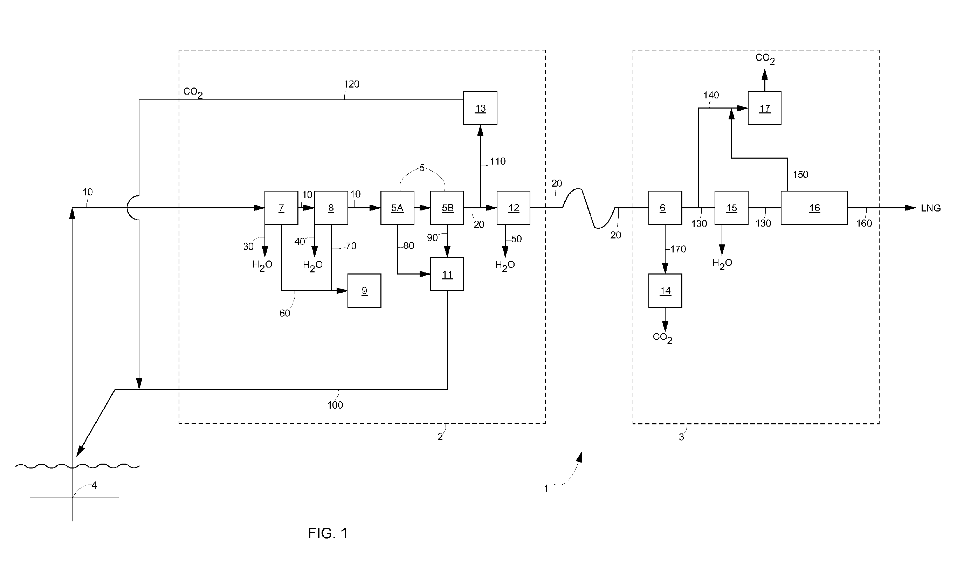

Fig. 1 schematically a process scheme in accordance with the present invention.

For the purpose of this description, a single reference number will be assigned to a line as well as a stream carried in that line. Same reference numbers refer to similar components.

Figure 1 schematically shows a process scheme (or system; generally indicated with reference no. 1) for the treating and liquefaction of a contaminant-containing hydrocarbon hydrocarbon feed gas stream such as natural gas. In this respect it is noted that, although the process scheme in Fig. 1 comprises liquefaction, this is not an essential step of the present invention. Further, although the embodiment of Fig. 1 focuses on the removal of CO₂ as the contaminant from a high CO₂ containing natural gas stream (typically containing 20 to 80 vol.% CO₂), it goes without saying that the contaminant may also be a different contaminant (such as H₂S), or the natural gas stream may contain less than 20 vol.% CO₂; also, as will become clear from the below, further contaminants (such as H₂O) may be removed as well.

The system 1 of Figure 1 is distributed over two separate locations, viz. an offshore first location 2 (using a platform or a floating vessel or the like) and an onshore second location 3. The first location 2 is usually situated near a well 4 where the natural gas to be treated and liquefied is produced, such as a natural gas or a petroleum reservoir. In the embodiment of Fig. 1, the well 4 is a subsea well.

On the first location 2 one or more treating units are located. These treating units (which may or may not form part of the pre-treatment unit 8) may include - in addition to the first treating unit 5 - conventional treating units such as a slug catcher; a condensate stabilizer; further acid gas removal (AGR) units for removal of H₂S and other sour gases; dehydration units for the removal of H₂O; sulphur recovery units (SRU); mercury removal units; nitrogen rejection units (NRU); helium recovery units (HRU); hydrocarbon dewpoint units; etc. Also fractionation or extraction units for recovery of e.g. C₃/C₄ liquid petroleum gas (LPG) and C₅₊ liquid (condensate) may be present at the first location 2. As these treating units as such are well known to the person skilled in the art, they are not further discussed here.

In the embodiment of Figure 1, the first location 2 contains a first treating unit 5 for removing a first part 80,90 of CO₂ from a CO₂-containing natural gas stream 10 in order to obtain a partially CO₂-depleted gas stream 20 and the second location 3 contains a second treating unit 6 for removing a second part 170 of CO₂ from the partially CO₂-depleted gas stream 20 in order to obtain a CO₂-depleted gas stream 130. The first treating unit 5 may be any (AGR; acid gas removal) unit for removing CO₂, but usually comprises two or more non-solvent based treating units (in Fig. 1 two treating units 5A and 5B are shown). The second treating unit 6 may also be any unit for removing CO₂, but usually comprises a solvent-based treating unit. As these units (both solvent-based and non-solvent based) are known per se, these are not further discussed here; examples of non-solvent based CO₂ treating units are disclosed in WO 2004/070297 (using cryogenic distillation), WO 2006/087332 (using rotational particle separation) and WO 2009/087155 (using membranes).

In the embodiment of Fig. 1, the first location 2 further comprises, in addition to the first treating unit 5, an inline separator 7 (for bulk removal of H₂O), a pre-treatment unit 8 (containing e.g. a dehydration unit, a mercury removal unit and a hydrocarbon dew-pointing facility for removing selected heavier hydrocarbons from the natural gas, etc.), a condensate stabilizer 9, a CO₂ compressor 11 and a further drying unit 12 (such as an absorption drying step using e.g. MEG, DEG or TEG) and a facility 13 (using some natural gas) for driving some of the units at the first location 2.

In the embodiment of Fig. 1, the second location 3 further comprises, in addition to the second treating unit 6, a CO₂ compressor 14, a further drying unit 15 (such as a mol sieve unit), a liquefaction plant 16, and a facility 17 (using some natural gas) for driving some of the units at the second location 3.

It goes without saying that on both the first and second locations 2,3 further treating units and equipment may be present.

During use of the process scheme shown in Figure 1, a CO₂-containing natural gas stream 10 (as e.g. obtained from the natural gas or petroleum reservoir 4) is processed, after H₂O removal in the inline separator 7 and pre-treatment in the pre-treatment unit 8, in the first treating unit 5 at the first location 2 thereby obtaining a partially CO₂-depleted gas stream 20. Further H₂O may be removed from the steam 20 in the drying unit 12. The H₂O is removed via lines 30, 40 and 50; other contaminants are removed via lines 60 and 70 (which may represent several lines) and processed in condensate stabilizer 9 and/or other units (not shown). CO₂ is removed from the first treating unit 5 via lines 80 and 90 and sent via CO₂ compressor 11 and line 100 to the well 4 (or a separate well) for reinjection; alternatively, the CO₂ in line 100 may be stored elsewhere. A part of the natural gas in line 20 may be sent via line 110 to the facility 13 to be used as fuel gas. The CO₂ produced in the facility 13 (removed via line 120) may be combined with stream 100 (or 80 or 90) for reinjection into the well 4.

The partially CO₂-depleted gas stream 20 is transported to the second location 3 over a distance of typically at least 1 km, usually at least 2 km, preferably at least 5 km, more preferably at least 10 km, even more preferably at least 50 km (i.e. the first location 2 and the second location 3 do not form part of the same production site).

At the second location 3, the partially CO₂-depleted gas stream 20 is further treated in the second treating unit 6 to obtain a CO₂-depleted gas stream 130 (and a CO₂-rich stream 170 which may be sent to storage). If desired the stream 130 may be further dried in drying unit 15 and - if desired - liquefied in liquefaction plant 16 to obtain LNG stream 160. Typically, the liquefaction takes place within a distance of 2 km, preferably 0.5 km, of the second treating unit 6 to allow for integration of the treating unit and the liquefaction plant such as using shared utility equipment. Moreover when the second part of the contaminant is removed near the liquefaction plant, it is easier to guarantee that the CO₂-depleted meets the required specification for being liquefied.

The LNG stream 160 may be sent to an LNG export terminal for transportation to remote markets in which the LNG will be regasified again on or near a LNG import terminal (not shown). The regasification of the LNG may take place onshore or offshore. Thereafter the regasified gas may be sent to a gas network and distributed to the end users. Alternatively, the stream 130 may be transported via pipelines to a plant for burning or converting the natural gas into one or more desired end products. Again, part of the natural gas may be sent via line 140 and 150 to the facility 17 to be used as fuel gas. A CO₂ containing exhaust stream may be discharged from the facility 17.

Typically, the CO₂ content of the CO₂-containing natural gas stream 10 will be in the range from 20 to 80 vol.%, preferably above 25 and below 70 vol.%. The CO₂ content of the partially CO₂-depleted gas stream 20 is typically in the range of from 2 to 25 vol.%, preferably above 3 and below 20 vol.%. The CO₂ content of the CO₂- depleted gas stream 130 is typically less than 500 ppm, preferably less than 200 ppm, more preferably less than 50 ppm.

The liquefaction plant 16 may be of any selected type. Typically, the liquefaction plant 16 comprises one or more heat exchangers wherein the CO₂-depleted gas stream 130, or a selected part thereof, is heat exchanged against one or more refrigerants to cool it into a liquid state. The a CO₂-depleted gas stream 130 or the selected part thereof may optionally be under pressure, for instance at 20 bar absolute pressure or higher, during the heat exchanging. In such a case, it may further optionally be depressurized downstream of said heat exchanging to produce a liquefied contaminant-depleted gas stream at approximately atmospheric pressure (for instance less than 1 bar gauge pressure). Many suitable liquefaction plants and processes are known in the art, each with their own specific advantages and disadvantages. Examples include the APCI propane precooled mixed refrigerant process, the APCI AP-X (TM) process, the Conoco-Philips cascade process, the Philips optimized cascade process, the Black and Veatch PRICO (TM) process, the Statoil/Linde Mixed fluid cascade process, the Axens Liquefin (TM) process, the Shell Double Mixed Refrigerant process, as all briefly described in "NATURAL GAS LIQUEFACTION PROCESSES COMPARISON" by P.-Y. Martin et al. LNG 14 (2004) paper PO-39 and "LNG Process Selection" by Tariq Shukri (Hydrocarbon Engineering, February 2004); Single Mixed Refrigerant processes, such as briefly described in "SHELL's FLOATING LNG PLANT FOR THE 21st CENTURY" by A. Bliault et al, in IGU World Gas Contress, June 2000; and Shell parallel mixed refrigerant processes such as described in "LARGE CAPACITY LNG PLANT DEVELOPMENT" by J.B. Pek et al. LNG 14 (2004) paper PS5-2; and gas expansion processes such as the BHP cLNG process or the closed loop nitrogen expansion cycle as briefly described in "LNG Production on Floating Platforms" by K.R. Johnsen et al. (Gastech 1998) and "Commercial breakthroughs in LNG technology" by David Wood (WorldOil October 2008); or variants of any of these.

The person skilled in the art will readily understand that many modifications may be made without departing from the scope of the invention.

## Claims

1. Method for producing a contaminant-depleted gas stream (130) from a contaminant-containing hydrocarbon feed gas stream (10), the method at least comprising the steps of:
(a) providing a contaminant-containing hydrocarbon feed gas stream (10);
(b) removing a first part of the contaminant from the contaminant-containing hydrocarbon feed gas stream (10) at a first location (2), thereby obtaining a partially contaminant-depleted gas stream (20);
(c) transporting the partially contaminant-depleted gas stream (20) to a second location (3), wherein the distance between the first location (2) and second location (3) is preferably at least 1 km;
(d) removing a second part of the same contaminant from the partially contaminant-depleted gas stream (20) at the second location (3), thereby obtaining a contaminant-depleted gas stream (130); and
(e) optionally liquefying the contaminant depleted gas stream (130), thereby obtaining a liquefied gas stream (160).

2. Method according to claim 1, wherein the contaminant is gaseous at atmospheric temperature and pressure, preferably selected from H₂S and CO₂, in particular CO₂.

3. Method according claim 1 or 2, wherein the contaminant-containing hydrocarbon feed gas stream (10) in step (a) contains at least 25 vol.% contaminant.

4. Method according to one or more of the preceding claims, wherein the partially contaminant-depleted gas stream (20) in step (b) contains at least 2 vol.% contaminant, preferably at least 5 vol.%, more preferably at least 10 vol.%.

5. Method according to one or more of the preceding claims, wherein the contaminant-depleted gas stream (130) in step (d) contains less than 500 ppm, preferably less than 200 ppm, more preferably less than 50 ppm contaminant.

6. Method according to one or more of the preceding claims, wherein the first location (2) is near a well (4), preferably offshore.

7. Method according to claim 6, wherein the first part of the contaminant obtained in step (b) is re-injected in the well (4).

8. Method according to one or more of the preceding claims, wherein the second location (3) is onshore.

9. Method according to one or more of the preceding claims, wherein the distance between the first (2) and second (3) location is at least 2 km, preferably at least 5 km, more preferably at least 10 km, even more preferably at least 50 km.

10. System (1) for producing a contaminant-depleted gas stream (130) from a contaminant-containing hydrocarbon feed gas stream (10), the system (1) at least comprising:
- a first treating unit (5) at a first location (2) for removing a first part of the contaminant from the contaminant-containing hydrocarbon feed gas stream (10), in order to obtain a partially contaminant-depleted gas stream (20);
- a second treating unit (6) at a second location (3) for removing a second part of the same contaminant from the partially contaminant-depleted gas stream (20), in order to obtain a contaminant-depleted gas stream (130); and
- optionally a liquefaction plant (16) for liquefying the contaminant-depleted gas stream (130).
